# EUROPEAN PATENT SPECIFICATION

(11) **EP 4 338 881 B1**
(45) Date of publication and mention of the grant of the patent: **05.11.2025**
(21) Application number: 22837382.5
(22) Date of filing: 06.06.2022
(51) Int. Cl.: B23K 31/00, B23K 9/032, B23K 9/04, B23K 9/095, B33Y 10/00, B33Y 50/02

(54) **FAULT-MONITORING DEVICE, FAULT-MONITORING METHOD, WELDING ASSISTANCE SYSTEM, AND WELDING SYSTEM**
FEHLERÜBERWACHUNGSVORRICHTUNG, FEHLERÜBERWACHUNGSVERFAHREN, SCHWEISSHILFSSYSTEM UND SCHWEISSSYSTEM
DISPOSITIF DE SURVEILLANCE DE DÉFAUT, PROCÉDÉ DE SURVEILLANCE DE DÉFAUT, SYSTÈME D'AIDE AU SOUDAGE ET SYSTÈME DE SOUDAGE

(30) Priority: 09.07.2021 JP 2021114316; 14.02.2022 JP 2022020685
(43) Date of publication of application: 20.03.2024
(73) Proprietor: KABUSHIKI KAISHA KOBE SEIKO SHO (KOBE STEEL, LTD.), Hyogo 651-8585 (JP)
(72) Inventor: KATAOKA, Yasuto, Nishi-ku, Kobe-shi, Hyogo 651-2271 (JP); YOSHIKAWA, Akinori, Nishi-ku, Kobe-shi, Hyogo 651-2271 (JP); SATO, Shinji, Nishi-ku, Kobe-shi, Hyogo 651-2271 (JP); HUANG, Shuo, Nishi-ku, Kobe-shi, Hyogo 651-2271 (JP); TAMURA, Eiichi, Nishi-ku, Kobe-shi, Hyogo 651-2271 (JP); TSUBAKI, Shota, Nishi-ku, Kobe-shi, Hyogo 651-2271 (JP)
(74) Representative: Müller-Boré & Partner Patentanwälte PartG mbB
(86) International application number: PCT/JP2022/022859
(87) International publication number: WO 2023/281963

(56) References cited:
- WO-A1-2021/054127
- JP-A- 2019 209 359
- JP-A- 2020 189 324
- JP-A- 2021 007 962

## Description

### TECHNICAL FIELD

The present invention relates to a fault-monitoring device, a fault-monitoring method, a welding assistance system, and a welding system.

### BACKGROUND ART

In arc welding, a technique for detecting a fault occurring in a welded structure and determining whether appropriate welding is performed is known. For example, Patent Literature 1 discloses a technique for determining a quality of welding by acquiring a plurality of pieces of information regarding a behavior of a welder, a shape of a molten pool, a wire stick out, and the like during semi-automatic welding (Patent Literature 1). Document JP2020189324-A discloses a fault-monitoring device capable of extracting internal defect candidates that comprises a shape profile acquisition unit configured to acquire a shape profile of the existing weld bead and a feature amount extraction unit configured to extract a feature amount of a concave shape formed by the plurality of existing weld beads included in the shape profile.

### CITATION LIST

### PATENT LITERATURE

Patent Literature 1: JP2008-110388A

### SUMMARY OF INVENTION

### TECHNICAL PROBLEM

For example, in a case where a multilayer manufacturing object is manufactured by laminating a weld bead formed by melting and solidifying a filler metal, a fault such as a cavity occurs inside the manufacturing object after manufacturing depending on a shape or arrangement of the weld bead. For example, when filling an inner region of a wall portion with weld beads after forming a wall portion in which weld beads are laminated in a frame shape, a target position of the weld bead may be narrowed by adjacent existing weld beads, or side surfaces of the existing weld beads have a large slope, resulting in small dents between the weld bead and the base. Thus, a molten metal of the weld bead cannot flow into the entire region to be filled at the target position, and a local cavity (unwelded portion) may be generated. This may occur not only in additive manufacturing but also in normal welding.

In order to confirm such faults such as an unwelded portion, a fault occurrence portion can be identified by inspecting the entire line of the weld bead by non-destructive inspection after welding, or by cutting the welded structure. In addition, a method of checking and confirming a production log that records a welding process may be considered. However, any of the methods requires time and effort and is not realistic. Further, when a structure to be a product is cut, it takes much time and effort to recover the structure as a product.

In addition, it is more desirable that a degree of influence on a quality of the structure can be evaluated for the fault of the unwelded portion that occurs. This makes it easy to determine whether repair is to be performed or welding is to be continued when a fault occurs, and as a result, a balance between productivity and quality can be improved. A specific example of an evaluation index includes a fault size, but it is difficult to sufficiently evaluate the fault size in a non-destructive inspection such as an ultrasonic search for a structure having a complicated shape.

Here, an object of the present invention is to provide a fault-monitoring device that identifies a portion where a fault is likely to occur during welding and prevent the occurrence of the fault, a fault-monitoring method, a welding assistance system, and a welding system.

### SOLUTION TO PROBLEM

The present invention includes the following constitutions.
(1) A fault-monitoring device that predicts, when a structure is formed by layering a plurality of weld beads formed by melting and solidifying a filler metal using a welding device, an occurrence of a welding fault based on history information on the formation of the weld beads by the welding device, the fault-monitoring device including:
   a shape profile acquisition unit that acquires a shape profile of the existing weld bead;
   a feature amount extraction unit that extracts a feature amount of a concave shape formed by the plurality of existing weld beads included in the shape profile;
   a fault position identification unit that identifies a fault candidate location where the welding fault is expected to occur according to the extracted feature amount; and
   a control unit that causes the shape profile acquisition unit to update the shape profile when the welding device newly forms the weld bead and repeatedly executes the extraction of the feature amount by the feature amount extraction unit and the identification of the fault candidate location by the fault position identification unit.
(2) A fault-monitoring method for predicting, when a structure is formed by layering a plurality of weld beads formed by melting and solidifying a filler metal using a welding device, an occurrence of a welding fault based on history information on the formation of the weld beads by the welding device, the method including:
   a step of acquiring a shape profile of the existing weld bead;
   a step of extracting a feature amount of a concave shape formed by the plurality of existing weld beads included in the shape profile;
   a step of identifying a fault candidate location where the welding fault is expected to occur according to the extracted feature amount; and
   a step of updating the shape profile when the welding device newly forms the weld bead and repeatedly executing the extraction of the feature amount and the identification of the fault candidate location.
(3) A welding assistance system including:
   the fault-monitoring device according to (1); and
   an instruction information generation device that generates instruction information for reducing the welding fault at the identified fault candidate location.
(4) A welding system including:
   the welding assistance system according to (3);
   the welding device that forms the weld bead; and
   a bead processing device that processes a fault candidate location of the weld bead of a formed structure.

### ADVANTAGEOUS EFFECTS OF INVENTION

According to the present invention, by identifying a portion where a fault is likely to occur during additive manufacturing, it is possible to prevent an occurrence of the fault.

### BRIEF DESCRIPTION OF DRAWINGS

Fig. 1 is an overall configuration diagram of a welding system.
Fig. 2 is a schematic functional block diagram of a control unit.
Fig. 3 is a flowchart showing a procedure for monitoring an occurrence of a fault.
Fig. 4 is a schematic diagram showing a welding torch, a shape detection unit, and a bead formation trajectory of a weld bead.
Fig. 5A is a diagram schematically showing a cross-sectional shape of existing weld beads formed adjacent to each other and is a sectional view when existing weld beads are appropriately arranged apart from each other.
Fig. 5B is a diagram schematically showing a cross-sectional shape of the existing weld beads formed adjacent to each other and is a sectional view when the existing weld beads are arranged close to each other.
Fig. 6 is an explanatory diagram showing an example of information about a fault candidate location displayed on a display unit.
Fig. 7 is a graph showing an example of a determination result of the fault candidate location along the bead formation trajectory.
Fig. 8 is an explanatory diagram showing an example of other feature amounts in a cross section of the existing weld beads orthogonal to a bead formation direction.
Fig. 9 is an explanatory diagram showing a state in which an interval between the existing weld beads shown in Fig. 8 is changed.
Fig. 10 is an explanatory diagram showing a state in which an interval between the existing weld beads shown in Fig. 8 is changed.
Fig. 11 is an explanatory diagram showing an example of other feature amounts in the cross section of the existing weld beads orthogonal to the bead formation direction.
Fig. 12 is an explanatory diagram showing an example of feature amounts in a case where the existing weld beads are approximated to trapezoids in a cross section of the existing weld beads orthogonal to the bead formation direction.
Fig. 13 is an explanatory diagram showing an example of feature amounts of the existing weld beads in the cross section of the existing weld beads orthogonal to the bead formation direction.
Fig. 14 is an explanatory diagram showing an example of feature amounts in a case where the weld beads are formed in a filling portion inside a wall portion in the cross section of the existing weld beads orthogonal to the bead formation direction.
Fig. 15 is an explanatory diagram showing a pitch of each weld bead when a plurality of weld beads are laminated in the cross section of the existing weld beads orthogonal to the bead formation direction.
Fig. 16 is an explanatory diagram showing a state in which a shape profile is approximated by a curve.
Fig. 17 is an explanatory diagram showing a result of predicting a shape of a manufacturing object in which the existing weld beads are laminated.
Fig. 18 is an explanatory diagram showing an influence factor on a fault.
Fig. 19 is a plan view showing the existing weld bead and a bead formation planned surface of a new weld bead.
Fig. 20 is a cross-sectional view taken along line XX-XX shown in Fig. 19.
Fig. 21 is a cross-sectional view taken along line XXI-XXI shown in Fig. 19.
Fig. 22 is a plan view showing an example of post-processing.
Fig. 23 is a cross-sectional view taken along line XXIII-XXIII shown in Fig. 22.
Fig. 24 is a plan view showing a state in which a generated protrusion is remelted.
Fig. 25 is a cross-sectional view taken along line XXV-XXV shown in Fig. 24.

### DESCRIPTION OF EMBODIMENTS

Hereinafter, configuration examples of the present invention will be described in detail with reference to the drawings. Here, additive manufacturing in which an additive manufacturing object is manufactured by laminating weld beads will be described as an example, and the present invention can also be applied to general welding such as fillet welding and butt welding.

### <Configuration of Welding System>

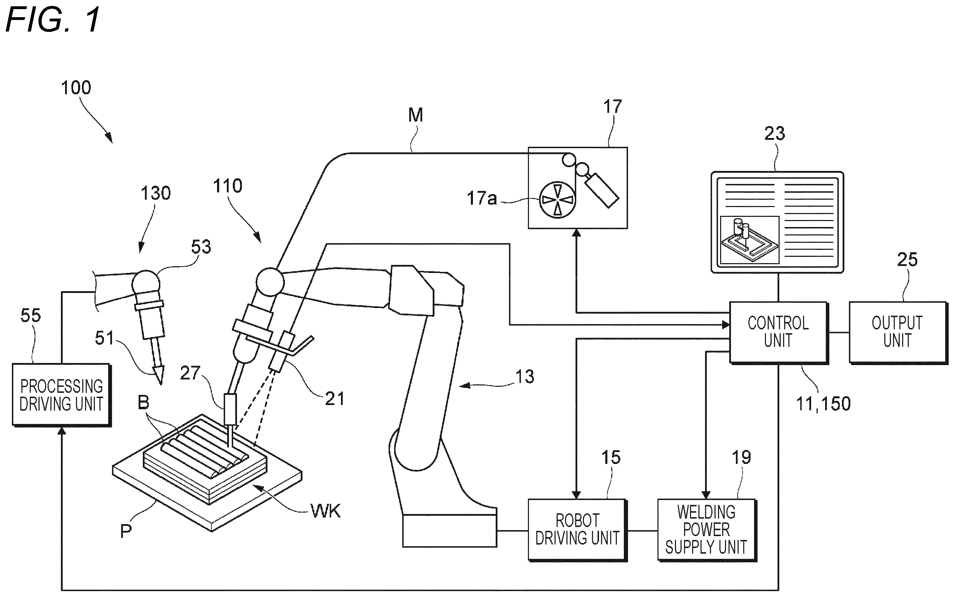

Fig. 1 is an overall configuration diagram of a welding system.

A welding system 100 includes a welding device 110, a bead processing device 130, and a welding assistance system 150. Here, a configuration in which the welding assistance system 150 is included in a control unit 11 of the welding device 110 is exemplified, and the welding assistance system 150 may be achieved separately from welding device 110.

### (Welding Device)

First, a configuration of the welding device 110 will be described.

The welding device 110 includes the control unit 11 and a welding robot 13, a robot driving unit 15, a filler metal supply unit 17, a welding power supply unit 19, a shape detection unit 21, a display unit 23, and an output unit 25, which are respectively connected to the control unit 11.

The welding robot 13 is an articulated robot, and a welding torch 27 is attached to a tip shaft thereof. The robot driving unit 15 outputs a command to drive the welding robot 13, and freely sets a position and orientation of the welding torch 27 three-dimensionally within a range of a degree of freedom of a robot arm. A continuously supplied filler metal (welding wire) M is supported at a tip of the welding torch 27.

The welding torch 27 is a gas metal arc welding torch that has a shield nozzle (not shown) and is supplied with shield gas from the shield nozzle. An arc welding method may be a consumable electrode-based method such as shielded metal arc welding method or carbon dioxide gas arc welding method, or a non-consumable electrode-based method such as TIG welding method or plasma arc welding method, and is appropriately selected depending on the manufacturing object (structure) to be produced. For example, in the case of the consumable electrode-based method, a contact tip is arranged inside the shield nozzle, and the contact tip holds the filler metal M to which a melting current is supplied. While holding the filler metal M, the welding torch 27 generates an arc from the tip of the filler metal M in the shield gas atmosphere.

The filler metal supply unit 17 includes a reel 17a around which the filler metal M is wound. The filler metal M is fed from the filler metal supply unit 17 to a feeding mechanism (not shown) attached to the robot arm or the like, and is fed to the welding torch 27 while being fed forward and backward by the feeding mechanism as necessary.

Any commercially available welding wire can be used as the filler metal M. For example, a welding wire specified by solid wires for MAG and MIG welding of mild steel, high tensile strength steel, and low temperature service steel (JIS Z 3312), flux-cored wires for arc welding of mild steel, high tensile strength steel, and low temperature service steel (JIS Z 3313), or the like can be used. Further, it is also possible to use the filler metal M such as aluminum, an aluminum alloy, nickel, or a nickel-based alloy according to required properties.

The welding power supply unit 19 supplies to the welding torch 27 the welding current and a welding voltage for generating an arc from the tip of the torch.

The shape detection unit 21 is provided on or near the tip shaft of the welding robot 13 and sets the vicinity of the tip of the welding torch 27 as a measurement region. The shape detection unit 21 may be another detection unit provided at a position different from the welding torch 27.

The shape detection unit 21 of this configuration is moved together with the welding torch 27 by the driving of the welding robot 13 and measures shapes of weld beads B and a portion serving as a base when the weld beads B are formed. As the shape detection unit 21, for example, a laser sensor that acquires reflected light of irradiated laser light as height data can be used. In addition, other detection units such as a camera for three-dimensional shape measurement may be used as the shape detection unit 21.

The display unit 23 is a display such as a liquid crystal panel or an organic EL panel and may be a touch panel having an input function of a user interface (UI) type that executes various processes by touching a finger or a pen. Information necessary for various operations of the welding system 100 is displayed on the display unit 23. In addition, the display unit 23 may display a 3D image in which line segments on each cross section of the laser reflected light measured by the shape detection unit 21 are collected, display information on a fault candidate location described later, and display welding conditions.

The control unit 11 may be electrically connected to the output unit 25. The output unit 25 outputs information output to the display unit 23 and various types of information such as a manufacturing program.

According to the welding device 110 having the above-described configuration, the manufacturing program corresponding to the manufacturing object to be produced is transmitted from the control unit 11 to the robot driving unit 15. The manufacturing program includes a large number of instruction codes and is created based on an appropriate algorithm according to various conditions such as shape data (CAD data or the like), material, and heat input amount of the manufacturing object.

The robot driving unit 15 executes the received manufacturing program, drives the welding robot 13, the filler metal supply unit 17, the welding power supply unit 19, and the like, and forms the weld beads B according to the manufacturing program. That is, the robot driving unit 15 drives the welding robot 13 to move the welding torch 27 along a trajectory (bead formation trajectory) of the welding torch 27, which is set in the manufacturing program. At the same time, the robot driving unit 15 drives the filler metal supply unit 17 and the welding power supply unit 19 according to the set welding conditions to melt and solidify the filler metal M at the tip of the welding torch 27 by the arc. In this way, the weld beads B are formed on a base plate P along the trajectory of the welding torch 27. The weld beads B are formed adjacent to one another to form a weld bead layer including a plurality of weld beads B. A weld bead layer of the next layer is laminated on this weld bead layer, and the manufacturing object WK having a desired three-dimensional shape is manufactured.

### (Bead Processing Device)

The bead processing device 130 performs machine working on the weld beads B by a processing driving unit 55 driving the robot arm 53 in which a processing tool 51 is attached to the tip shaft. The processing driving unit 55 receives a driving command from the control unit 11 to move the robot arm 53 and arranges the processing tool 51 to a desired position and orientation. Then, a part of the weld beads B, which will be described later, is removed by the processing tool 51.

### (Control Unit)

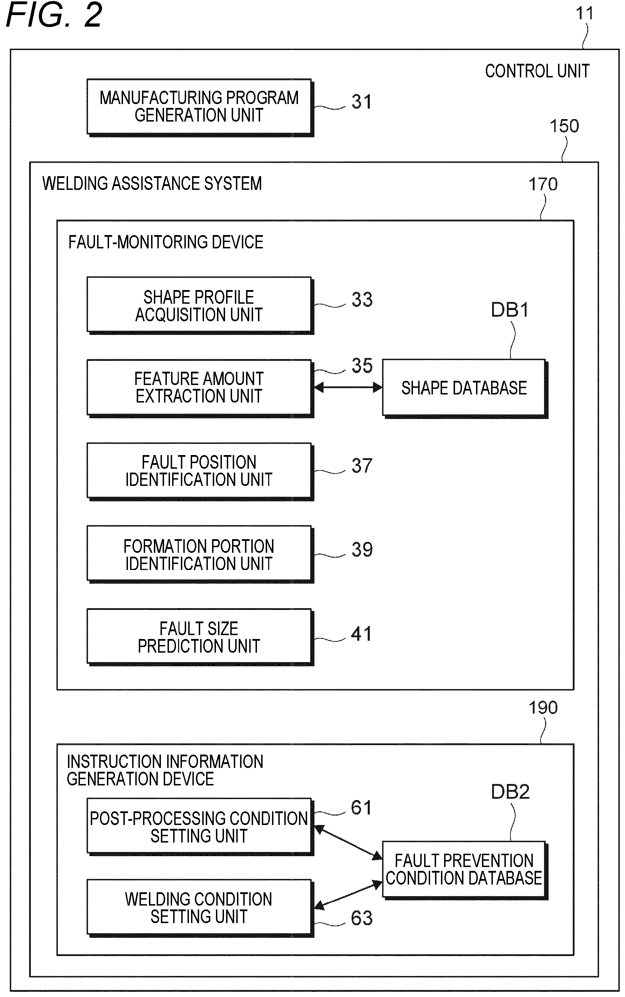

Fig. 2 is a schematic functional block diagram of the control unit 11.

The control unit 11 may include a manufacturing program generation unit 31 and the welding assistance system 150 in addition having a function of collectively controlling the robot driving unit 15, the filler metal supply unit 17, the welding power supply unit 19, the shape detection unit 21, and the display unit 23 shown in Fig. 1.

The manufacturing program generation unit 31 determines the bead formation trajectory representing a formation order of the weld beads B for manufacturing the manufacturing object according to input a manufacturing target, manufacturing conditions, and the like, and generates the manufacturing program described above.

When the manufacturing object is manufactured by layering a plurality of weld beads B formed by melting and solidifying the filler metal M using the welding device 110, the welding assistance system 150 predicts an occurrence of the welding fault based on history information on the formation of the weld beads B by the welding device 110 and generates instruction information for reducing the predicted welding fault. The welding assistance system 150 includes a fault-monitoring device 170 and an instruction information generation device 190. Details of the fault-monitoring device 170 and the instruction information generation device 190 will be described later.

The control unit 11 having the functions described above is not shown and is achieved by a computer device including a processor such as a CPU, a memory such as a ROM and a RAM, and a storage unit such as a hard disk driver (HD) and a solid state drive (SSD). Each component of the control unit 11 described above operates according to commands from the CPU and performs respective functions. Further, the control unit 11 may be arranged separately from the welding device 110 and connected to the welding device 110 from a remote location via a communication method such as a network. In addition to being created by the control unit 11, the manufacturing program may be created by another device and input to the control unit 11 via communication or a storage medium.

### (Fault-Monitoring Device)

When the manufacturing object is manufactured by layering a plurality of weld beads formed by melting and solidifying the filler metal M using the welding device 110 shown in Fig. 1, the fault-monitoring device 170 predicts the occurrence of the welding fault based on the history information on the formation of the weld beads by the welding device 110. That is, when the welding device 110 forms the weld beads B in accordance with a predetermined manufacturing program, a portion where the welding fault is likely to occur is predicted using a feature amount representing the shape of the weld. The fault-monitoring device 170 includes a shape profile acquisition unit 33, a feature amount extraction unit 35, a fault position identification unit 37, a formation portion identification unit 39, and a fault size prediction unit 41. A function of each unit described above will be schematically explained using a manufacturing example shown below.

### <Fault-Monitoring Method>

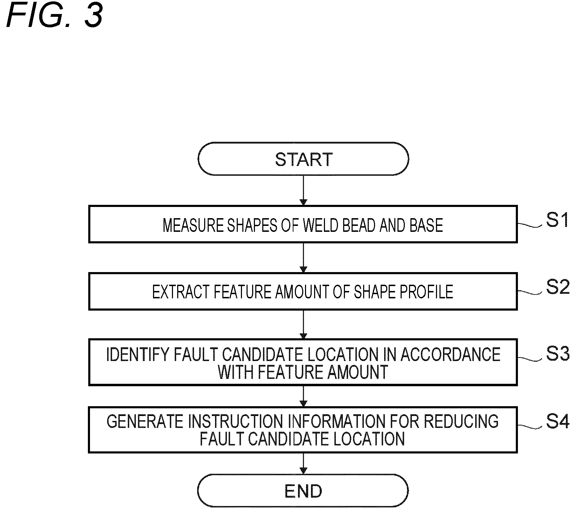

Fig. 3 is a flowchart showing a procedure of monitoring an occurrence of a fault.

### (Step of Acquiring Shape Profile)

First, the welding torch 27 is moved by the welding device 110 shown in Fig. 1 along the bead formation trajectory, which is a movement trajectory of the welding torch 27 set in a driving program, and the weld bead is formed. Along with this bead formation, the shape detection unit 21 measures shapes of the weld bead and a bead formation planned surface serving as a base of the weld bead (S1).

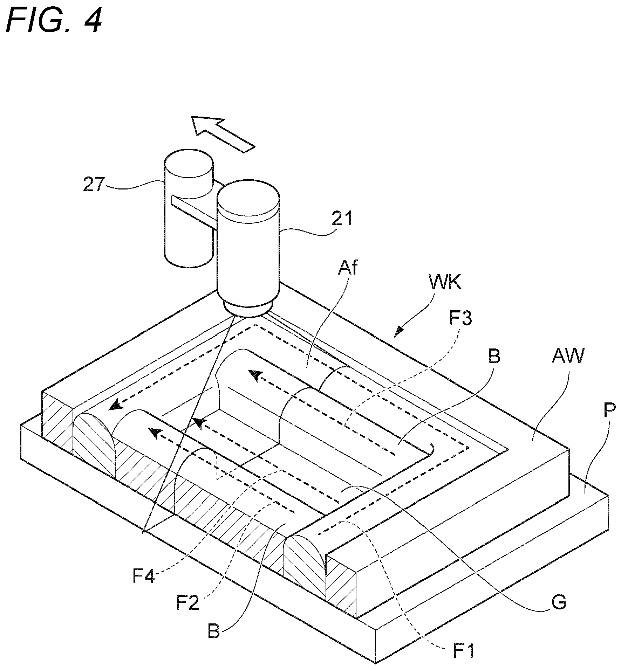

Fig. 4 is a schematic diagram showing the welding torch 27, the shape detection unit 21, and the bead formation trajectory of the weld beads B.

The weld beads B are sequentially formed by the welding torch 27 moving on the base plate P along the bead formation trajectory created in advance. Further, at the same time as the welding torch 27 is moved, the shape detection unit 21 measures surface shapes of the existing weld beads B and a bead formation planned surface G. Then, the shape detection unit 21 outputs the surface shapes of the weld beads B and the bead formation planned surface G (these are collectively referred to as a shape profile) to the control unit 11.

It is preferable to measure the shape profile at the same time as the weld beads B are formed. For example, when the weld beads are laminated while moving a work with the welding torch 27 fixed, the shape detection unit 21 may be arranged at a fixed position, and when the weld beads are laminated while moving the welding torch 27, the shape detection unit 21 may be fixedly arranged around the welding torch 27. According to this, while the weld beads B are formed by the movement of the welding torch 27, the shape of the formed weld beads B can be efficiently measured along a movement path, and thus a takt time can be shortened. This measurement of the shape profile may be performed at a timing different from a time when the weld beads B are formed or may be performed at a desired timing depending on various conditions. Hereinafter, a weld bead that is to be formed before being formed will also be referred to as a "new weld bead", and a weld bead that has already been formed will also be referred to as an "existing weld bead".

A manufacturing object WK shown here includes a frame-shaped wall portion AW formed by the weld beads B and a filling portion Af that fills a region surrounded by the wall portion AW with the weld beads B. The filling portion Af is formed after the wall portion AW is formed. That is, after the wall portion AW is formed, the weld beads B, which become the filling portion Af, are formed inside the wall portion AW along bead formation trajectories F1 to F3 shown by dotted lines. After that, the weld bead B is formed along a bead formation trajectory F4. An order of formation of the weld beads B within the filling portion Af may be any order.

Priority is given to manufacturing the weld beads forming the wall portion AW with high shape accuracy, and regarding the weld beads forming the filling portion Af surrounded by the wall portion AW, priority is given to filling the weld beads quickly and in large quantities over accuracy. When the weld bead is formed in the filling portion Af, faults such as cavities are particularly likely to occur, and it is important to prevent such faults from occurring.

For example, when the beads on the bead formation trajectories F2 and F3 are formed, the shape profile acquisition unit 33 shown in Fig. 2 drives the shape detection unit 21 to measure the shape profile of the existing weld beads B and acquires the shape profile thereof. That is, a shape profile of the pair of existing weld beads B existing on both sides of the bead formation trajectory F4 and the bead formation planned surface G is determined.

### (Step of Extracting Feature Amount)

The feature amount extraction unit 35 shown in Fig. 2 extracts a predetermined feature amount from the acquired shape profile.

The feature amount extraction unit 35 identifies the existing weld bead adjacent to a bead formation trajectory of the new weld bead to be formed. Then, the feature amount extraction unit 35 obtains the feature amount using information on the shape profile of the identified existing weld bead and the bead formation planned surface (S2).

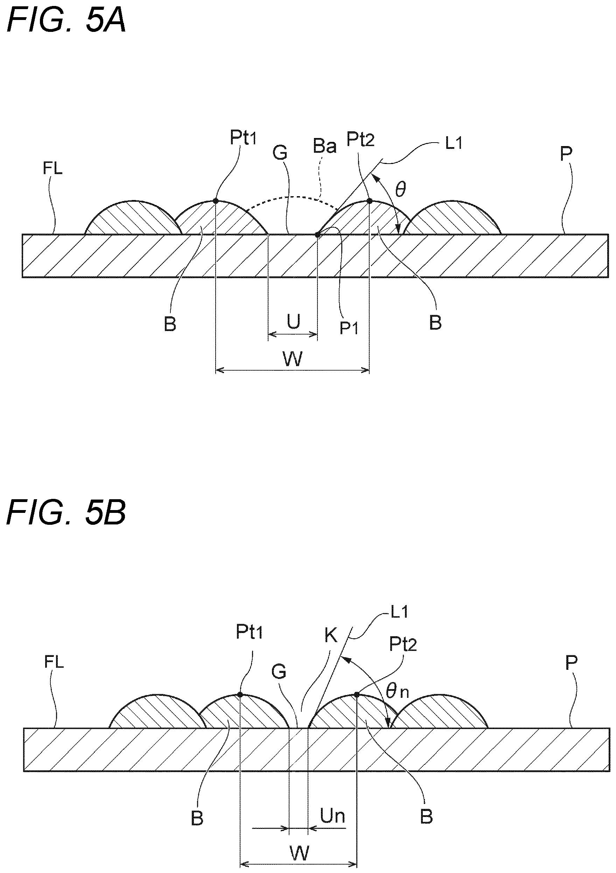

Fig. 5A is a diagram schematically showing a cross-sectional shape of the existing weld beads B formed adjacent to each other and is a sectional view when the existing weld beads B are appropriately arranged apart from each other. Fig. 5B is a diagram schematically showing a cross-sectional shape of the existing weld beads B formed adjacent to each other and is a sectional view when the existing weld beads B are arranged close to each other.

As shown in Fig. 5A, when a pair of adjacent existing weld beads B are appropriately arranged apart, a new weld bead Ba indicated by a dotted line is formed on the bead formation planned surface G. Regarding a direction (left-right direction in Fig. 5A) orthogonal to the bead formation direction at this time, an interval (bead formation region width) between a pair of existing weld beads B, which are arranged adjacent to each other and forms a valley portion, at a valley bottom is defined as a bottom portion interval U, and an interval between a bead top portion Pt1 and a bead top portion Pt2 is defined as a bead interval W. The bottom portion interval U may be an interval between bead toe ends (start end and completion end of bead formation) of the pair of existing weld beads.

In a cross section orthogonal to the bead formation direction of the existing weld beads B, a tangent line at a position P1 at which the existing weld bead B having the bead top portion Pt2 contacts a base surface FL of the existing weld bead B is defined as L1. Among intersection angles between the tangent line L1 and the base surface FL, an angle on an existing weld bead B side that is in contact with the tangent line L1 is defined as a root angle θ. The root angle θ is obtained in the same manner for the existing weld bead B having the bead top portion Pt1. Here, the root angles θ of the existing weld beads B of the bead top portions Pt1 and Pt2 are assumed to be equal to each other, and an average value, a maximum value, or the like of each root angle θ may be determined as a representative value of the root angles θ.

As shown in Fig. 5B, when the existing weld beads B are formed close to each other, a bottom portion interval Un becomes narrower than in the case shown in Fig. 5A (Un < U). A root angle θn on a side surface of the existing weld bead B becomes larger (θn > θ). In that case, a narrow portion K is formed between the existing weld beads B. When a weld bead is to be newly formed in the narrow portion K, a molten metal of the new weld bead does not completely flow into a narrow space between the existing weld beads B and the bead formation planned surface G, and a minute space may remain to form a cavity. This cavity becomes a fault (unwelded portion) and deteriorates welding quality, and consequently, deteriorates a strength of the manufacturing object.

Therefore, the fault-monitoring device 170 monitors feature amounts of the bottom portion interval U (Un), which becomes a width newly forming the weld bead as described above and the root angle θ (θn) to identify the fault candidate location that is likely to become the fault.

When the bottom portion interval U (Un) and the root angle θ (θn) are used in combination as the feature amounts, a detection accuracy of the fault candidate location can be expected to be improved more than when one feature amount is used. Furthermore, the bead interval W may be used in combination as the feature amount.

Figs 5A and 5B are examples in which the new weld bead is formed between the pair of existing weld beads B adjacent to each other, but the existing weld beads may exist only on one side. In that case, a distance between the existing weld beads on one side and the bead formation trajectory (planned line) of the new weld bead may be used as the feature amount in the same manner as the bottom portion interval U or the bead interval W as described above. That is, the feature amount can be appropriately selected depending on an arrangement state of the existing weld beads B.

For the extraction of this feature amount, a shape database DB1 in which the shape profile and the feature amount are associated in advance may be used. The shape database DB1 is a database in which the information on the shape profile measured by the shape detection unit 21 is registered in associated with a position (coordinates and path) of the bead formation trajectory. The information on the shape profile includes, for example, a surface shape of the weld bead B, coordinate values of the measured position, and a bead width and a bead height of the existing weld bead B. For example, when the shape detection unit 21 is a laser sensor, information on reflection profile of laser light may be recorded in the shape database DB1. In addition, information related to the above-described shape of the existing weld bead may be obtained by calculation from the information on the reflection profile and recorded.

When the shape database DB1 is used, the feature amount extraction unit 35 shown in Fig. 2 refers to the shape database DB1, extracts, from the shape database DB1, information on an identified shape profile that can be approximated to the measured shape profile, and obtains a feature amount according to the extracted shape profile. The feature amount may be obtained from the information on the shape profile acquired from the shape database DB1, and the information related to the shape of the existing weld bead recorded in the shape database DB1 in advance may be set as the feature amount.

In this way, the feature amount extraction unit 35 outputs the obtained information on the feature amount to the fault position identification unit 37.

### (Step of Identifying Fault Position)

Next, the fault position identification unit 37 identifies, in accordance with the extracted feature amount, the fault candidate location at which the occurrence of the welding fault is expected (S3). That is, in accordance with the obtained feature amount of the weld bead B, the fault candidate location in which the occurrence of the fault is predicted is identified in the new weld bead to be formed.

For example, when the bottom portion interval U is out of an allowable range larger than a predetermined threshold value, or when the root angle θ is out of an allowable range larger than a predetermined threshold value, the position is set as the fault candidate location. When the bottom portion interval U and the root angle θ both exceed the allowable range set by a threshold value described above, the position may be defined as the fault candidate location. On the other hand, when the bottom portion interval U is smaller than the predetermined threshold value, it may be assumed that the molten metal will not sufficiently flow into a bottom portion, and the position may be set as the fault candidate location.

The threshold value for determining the fault candidate location is obtained, for example, by examining a relation of the occurrence of the fault with respect to the feature amount such as the bottom portion interval U and the root angle θ from an existing element test or simulation. The threshold value may be individually set for each feature amount or may be set by combining a plurality of feature amounts. For example, the threshold value may be obtained by a predetermined calculation using values of the bottom portion interval U and the root angle θ for the cross-sectional area of a space where the bead formation planned surface G can be welded.

The information on the fault candidate location extracted by the above steps may be displayed on, for example, the display unit 23 shown in Fig. 1 to be able to be confirmed by an operator. In addition, the information on the fault candidate location may be output to the output unit 25 to be read by an appropriate external device.

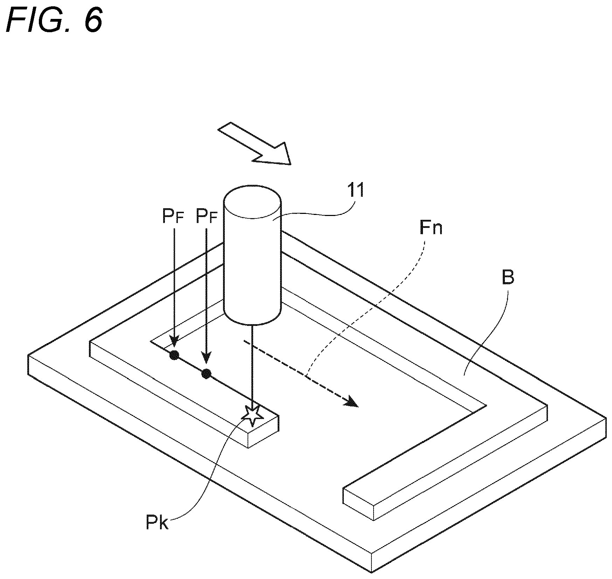

Fig. 6 is an explanatory diagram showing an example of the information on the fault candidate location displayed on the display unit 23.

An extracted fault candidate location PF may be displayed together with a current weld bead formation position Pk on the display unit 23. Accordingly, it is easy for the operator to grasp the fault candidate location. Further, a path (bead formation trajectory Fn) for forming a new weld bead may be displayed next to a current path in which the weld bead is formed on the display unit 23. In this case, it is possible to grasp in advance a portion where a fault easily occurs in the next path. Although not shown, contents of a recommended operation may be displayed, such as a current welding condition such as a travel speed and a supplying speed of the filler metal, and a welding condition for the fault candidate location.

Furthermore, with respect to a 3D model displayed on a screen of the display unit 23, the weld beads B which are being formed may be color-coded for each temperature, the fault candidate location may be displayed by dots, or the like, so that a situation during the bead formation may be visually grasped and easily displayed. In addition, when the number of fault candidate locations becomes equal to or more than a predetermined number, information such as a recommended operation of post-processing or a welding condition to be changed may be displayed. By doing so, the operator can visually and easily judge whether to repair the existing weld bead, change the welding conditions for the next path, whether to stop manufacturing, and the like.

The above-described fault candidate location may be identified for all the paths forming the weld bead or may be limited to only a part of the paths in order to reduce the processing.

For example, as shown in Fig. 4 described above, the manufacturing object WK includes the frame-shaped wall portion AW formed by the weld beads B and the filling portion Af that fills the region surrounded by the wall portion AW with the weld beads B, the formation portion identification unit 39 shown in Fig. 2 identifies whether the existing weld bead B is the wall portion AW continuous in a wall shape or the filling portion Af. This identification may be determined from, for example, the width of each existing weld bead obtained from the measured shape profile, a height distribution of the existing weld bead, or the like, or may be determined based on information on a weld volume or the bead width of each weld bead set in a manufacturing plan of the manufacturing object WK.

When being capable of identifying the filling portion Af from the existing weld bead B to determine that the neat path is formed on the filling portion Af, the formation portion identification unit 39 identifies the fault candidate location. In contrast, when being capable of identifying the wall portion AW from the existing weld bead B to determine that the next path is formed on the wall portion AW, the formation portion identification unit 39 omits the identification of the fault candidate location in the next path. In this way, by identifying the fault candidate location only in the case of the path that forms the filling portion Af where the fault is particularly likely to occur, the process can be simplified and the takt time can be shortened.

Although Fig. 4 shows a form in which four sides of the filling portion Af are surrounded by the wall portion AW, a form in which the filling portion Af is surrounded is not limited to this. The form may be, for example, a form of being surrounded by two sides in which the filling portion Af is arranged between a pair of parallel wall portions, and may be a form of being surrounded by three sides in which the filling portion Af is arranged in a region surrounded by a pair of parallel wall portions and another wall portion that joins end portions of the pair of wall portions. A shape of the filling portion Af is not limited to a square and may be a polygon having five or more sides, a circle, an ellipse, or any shape.

The fault size prediction unit 41 shown in Fig. 2 predicts a fault size from the extracted position information on the fault candidate location. That is, when fault candidate locations continuously occurs along the bead formation trajectory, it is determined that these fault candidate locations are one block fault, and a region of the continuous fault candidate locations is regarded as a fault size of one fault.

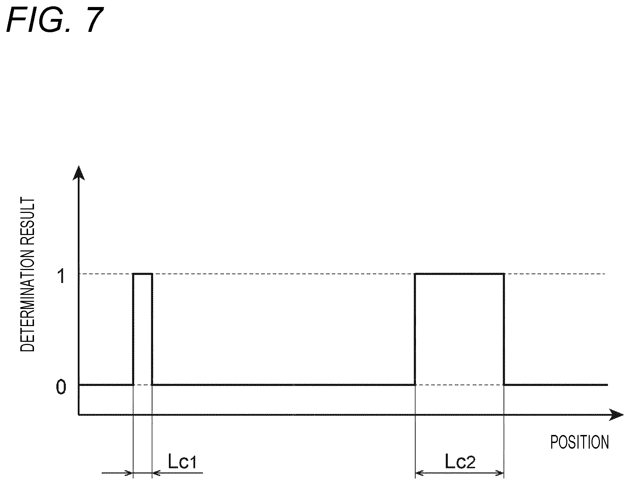

Fig. 7 is a graph showing an example of a determination result of the fault candidate location along the bead formation trajectory.

The fault size prediction unit 41 determines whether the feature amount exceeds a predetermined allowable range from a result of the fault position identification unit 37 obtaining the feature amount for each position along the bead formation trajectory. Fig. 7 shows an example in which a value of "1" is assigned when the feature amount exceeds the allowable range, and a "0" is assigned when the feature amount does not exceed the allowable range.

The fault size prediction unit 41 predicts the size of the fault candidate location from the determination result of the feature amount, which is continuously output along the bead formation trajectory from the fault position identification unit 37. That is, regions Lc1 and Lc2 in which the feature amount exceeds the allowable range and the determination result is "1" are extracted. A fault length is predicted from a length of the region where the determination result if "1" (length along the bead formation trajectory). The fault size prediction unit 41 displays information on the fault candidate location and the predicted fault length on the display unit 23. Each piece of information may be output to the output unit 25.

According to this, in addition to the position of the fault candidate location, the fault length can be predicted, so that a specific treatment content for preventing the occurrence of the fault, which will be described in detail later, can be accurately set.

In this welding system 100 as described above, when the weld bead is newly formed by the welding device 110, the control unit 11 causes the shape profile acquisition unit 33 to update the shape profile and repeatedly executes the extraction of the feature amount by the feature amount extraction unit 35 and the identification of the fault candidate location by the fault position identification unit 37. It is possible to prevent the occurrence of the fault at the fault candidate location by changing the post-processing such as machine working or remelting the existing weld bead at the fault candidate location obtained in this manner by the bead processing device 130 or welding conditions of the new weld bead.

### (Another Example of Feature Amount)

In addition to the parameters described above, various parameters can be used as the feature amount.

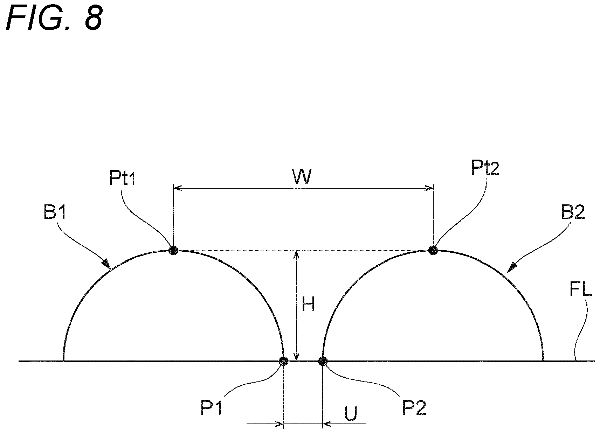

Fig. 8 is an explanatory diagram showing an example of other feature amounts in the cross section of the existing weld beads orthogonal to the bead formation direction.

When a pair of existing weld beads B1 and B2 adjacent to each other are formed on the base surface FL representing the base plate or a surface of the existing weld bead on a lower layer, in addition to the bottom portion interval U and the bead interval W described above, an average height H of a height from the base surface FL to the bead top portion Pt1 and a height from the base surface FL to the bead top portion Pt2 is defined as the feature amount. The average height H corresponds to a valley depth to the valley bottom of the valley portion formed by the pair of existing weld beads B1 and B2 in the laminating direction.

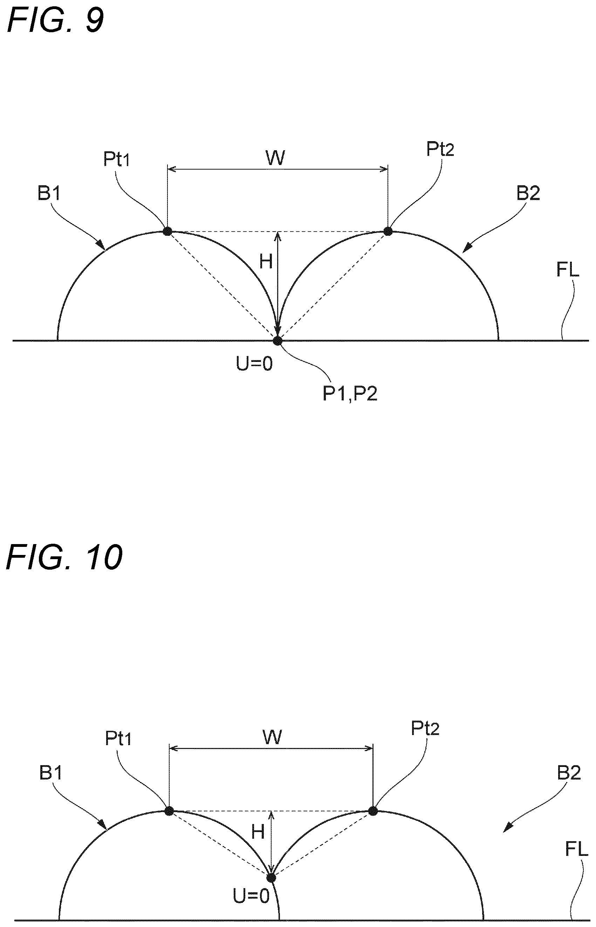

Figs. 9 and 10 are explanatory diagrams showing a state in which the interval between the existing weld beads shown in Fig. 8 is changed.

As shown in Fig. 9, when the existing weld beads B1 and B2 approach each other to a position where the existing weld beads B1 and B2 come into contact with each other, the bottom portion interval U becomes 0, and the average height H becomes a valley depth between beads represented by a triangle of Pt1-Pt2-P1 (P2) shown by dotted lines.

Furthermore, as shown in Fig. 10, when the existing weld beads B1 and B2 overlap each other, the bottom portion interval U is 0, and the average height H is smaller than those in the cases shown in Figs. 8 and 9.

As described above, by including the combination of the bottom portion interval U, the bead interval W, and the average height H as the feature amounts, the shape of the valley portion can be identified as substantially the same as the combination of the feature amounts including the root angle θ described above. The feature amount may be a cross-sectional area of a concave shape which is calculated using at least one of the root angle θ, the bead formation region width, the bead interval W, the average height H (valley depth), the bottom portion interval U, and the like. In the case where the cross-sectional area is used as the feature amount, even when the accuracy of the measurement point varies for each measurement place, the evaluation can be performed while reducing influence of the variation.

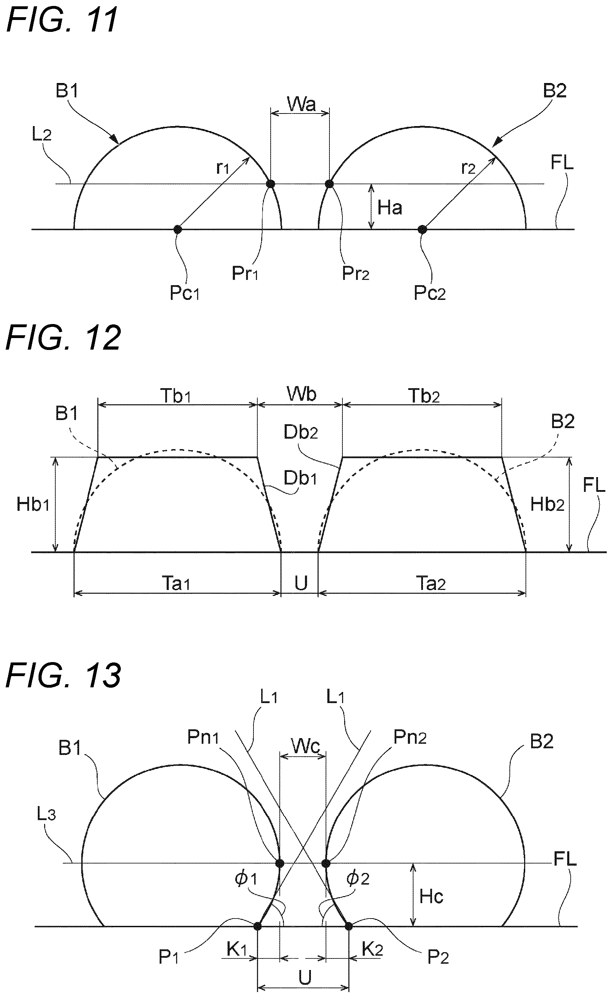

Fig. 11 is an explanatory diagram showing an example of other feature amounts in the cross section of the existing weld beads orthogonal to the bead formation direction.

A radial distance from a bead center Pc1 in one existing weld bead B1 is defined as r1, and a radial distance from a bead center Pc2 in the other existing weld bead B2 shown in Fig. 11 is defined as r2. A width Wa is freely set, and a height (height of a straight line L2) of surface positions Pr1 and Pr2 at which a distance between the existing weld bead B1 and the existing weld bead B2 becomes the width Wa is defined as Ha. In addition, the height Ha may be freely set, a surface position of the existing weld bead B1 at the height Ha may be defined as Pr1, a surface position of the existing weld bead B2 at the height Ha may be defined as Pr2, and a distance between the surface position Pr1 and the surface position Pr2 may be defined as Wa.

At least one of the radial distances r1 and r2 and the surface positions Pr1 and Pr2 with respect to the height Ha can be used as the feature amount.

Alternatively, the feature amount may be set by approximating the existing weld beads B1 and B2 to trapezoids.

Fig. 12 is an explanatory diagram showing an example of feature amounts in a case where the existing weld beads are approximated to trapezoids in a cross section of the existing weld beads orthogonal to the bead formation direction.

A lower side (lower base), an upper side (upper base), and a height of a trapezoid Db1 obtained by trapezoidal approximation of the existing weld bead B1 are defined as Ta1, Tb1, and Hb1, and a lower side, an upper side, and a height of a trapezoid Db2 obtained by trapezoidal approximation of the existing weld bead B2 are defined as Ta2, Tb2, and Hb2. A distance between end portions on the base surface FL of the trapezoid Db1 and the trapezoid Db2 is defined as the bottom portion interval U. A distance of end portions on the upper side of the trapezoid Db1 and the trapezoid Db2 is defined as Wb. These parameters may be set as the feature amount.

Fig. 13 is an explanatory diagram showing an example of feature amounts of the existing weld beads in the cross section of the existing weld beads orthogonal to the bead formation direction.

In the case where a cross-sectional shape of each of the existing weld beads B1 and B2 is a circle having a longer arc length than the semicircle shown in Fig. 11, a distance between surface positions Pn1 and Pn2 where the existing weld bead B1 and the existing weld bead B2 are closest to each other is defined as Wc, a height (straight line L3) of these closest surface positions Pn1 and Pn2 from the base surface FL is defined as Hc, a depth of a weld leg from a position P1 of the existing weld bead B1 in contact with the base surface FL to a position along the base surface FL corresponding to the surface position Pn1 is defined as K1, and a depth of a weld leg from a position P2 of the existing weld bead B2 in contact with the base surface FL to a position along the base surface FL corresponding to the surface position Pn2 is defined as K2. In addition, φ1 and φ2 are angles of the weld leg (angles obtained by subtracting the root angle from 180°), and the above-described U is the bottom portion interval.

As described above, at least one of Wc, Hc, K1, K2, φ1, φ2, and U shown in Fig. 13 also can be set as the feature amount.

The above-described width and height (valley depth) are lengths represented by a coordinate system of two orthogonal axes of a bead lamination direction (for example, vertical direction) and an in-plane direction of the base surface FL, which are orthogonal to each other, and may be lengths represented by an inclined coordinate system.

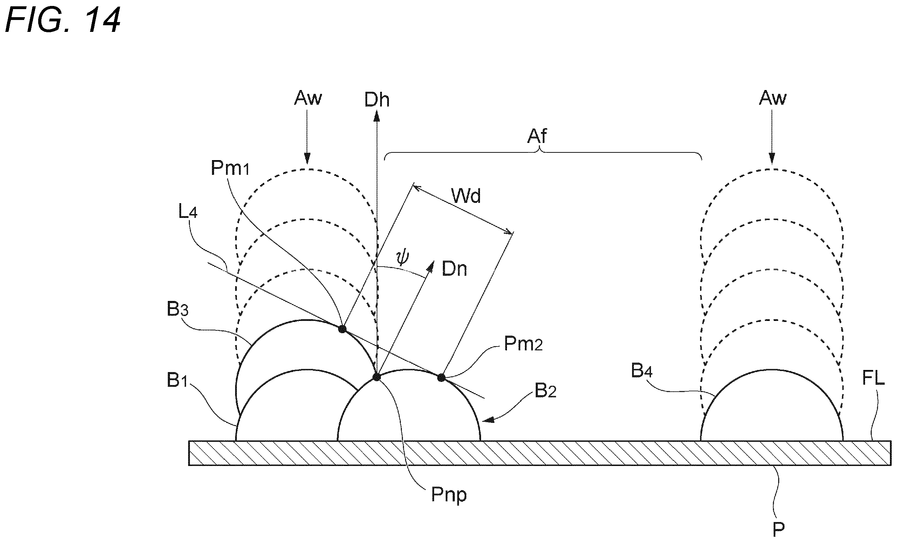

Fig. 14 is an explanatory diagram showing an example of feature amounts in a case where the weld beads are formed in the filling portion Af inside the wall portion AW in the cross section of the existing weld beads orthogonal to the bead formation direction.

In the case where the existing weld bead B2 serving as the filling portion Af is arranged between existing weld beads B1 and B3 on one side, which serve as the frame-shaped wall portion AW, and an existing weld bead B4 on the other side, a narrow portion Pnp is formed between the existing weld bead B2 and the existing weld bead B3. At a position including the narrow portion Pnp, the cavity (fault) is likely to occur when a weld bead is newly formed.

However, the existing weld bead B3 is a bead formed after the existing weld bead B2 is formed, and an orientation of the narrow portion Pnp is inclined from the bead lamination direction Dh. A common tangent line L4 to the existing weld beads B2 and B3 is obtained, and a contact point between the common tangent line L4 and the existing weld bead B2 is defined as Pm1, and a contact point between the common tangent line L4 and the existing weld bead B3 is defined as Pm2. An inclination direction Dn passing through the narrow portion Pnp and orthogonal to the common tangent line L4 is obtained. An angle formed by the inclination direction Dn and the bead lamination direction Dh is defined as an inclination angle ψ. A distance from the contact point Pm1 to the contact point Pm2 along the common tangent line L4 is defined as Wd, and a distance from the narrow portion Pnp to the common tangent line L4 along the inclination direction Dn is defined as a height Hd.

As described above, at least one of ψ, Wd, and Hd shown in Fig. 14 also can be set as the feature amount.

When a plurality of weld beads are periodically laminated, the size and an arrangement pitch of each existing weld bead are often constant. However, in the case where the shape of the weld bead is suddenly disturbed, the disturbed weld bead may have a shape that induces faults, such as the formation of a narrow portion that is narrower than a surrounding area. Therefore, the arrangement pitch of the existing weld bead may be set as the feature amount.

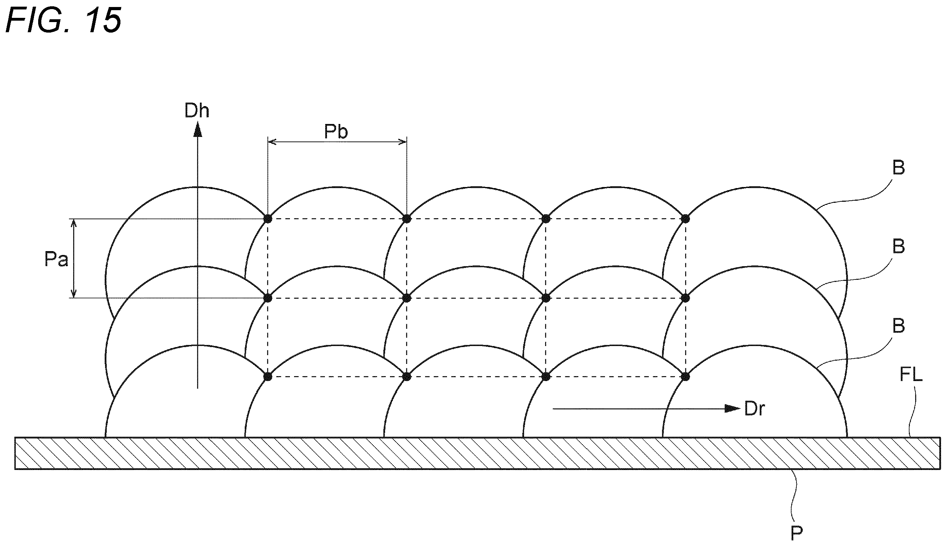

Fig. 15 is an explanatory diagram showing a pitch of each weld bead when a plurality of weld beads are laminated in the cross section of the existing weld beads orthogonal to the bead formation direction.

When a plurality of existing weld beads B are arranged, an arrangement pitch Pa along the bead lamination direction Dh and an arrangement pitch Pb along a bead arrangement direction Dr of each of the existing weld beads B are obtained, and the arrangement pitches Pa and Pb may be set as the feature amount. Furthermore, an amount of deviation from a reference value of the determined arrangement pitches Pa and Pb may be set as the feature amount.

In addition to setting values directly obtained from the shape profile, the various feature amounts described above may be obtained from a result of approximating the shape profile to a curve or a specific model shape.

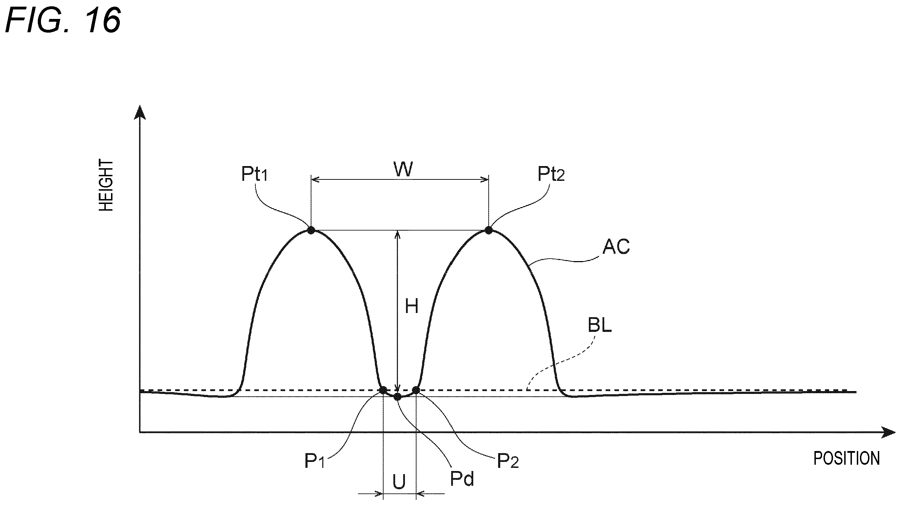

Fig. 16 is an explanatory diagram showing a state in which the shape profile is approximated by a curve.

First, from the measured shape profile, a baseline BL, which is a base surface other than a weld bead portion, is determined by curve approximation. Then, from a determined approximate curve AC, the feature amounts such as the bead interval W, the bottom portion interval U, and the average height H of the pair of existing weld beads described above are obtained by calculation.

The average height H may be an average height of a height from a lowest point Pd at which the approximate curve AC is further lower than the baseline BL to one bead top portion Pt1 and a height to the other bead top portion Pt2.

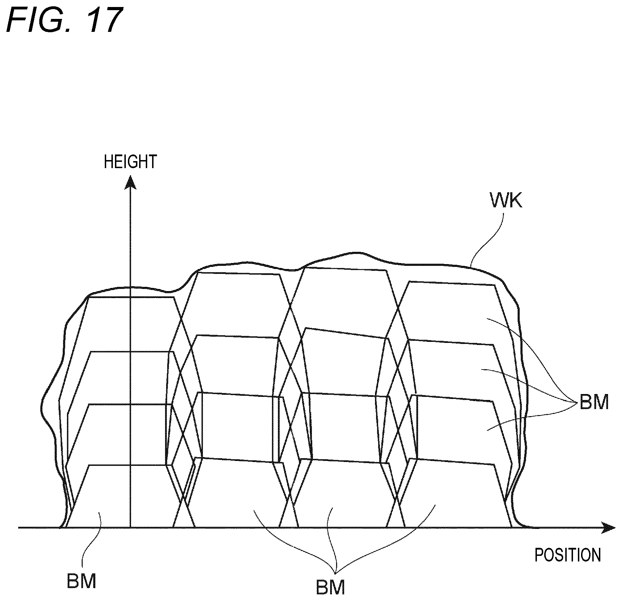

Fig. 17 is an explanatory diagram showing a result of predicting the shape of the manufacturing object in which the existing weld beads are laminated.

The shape of the manufacturing object WK obtained by laminating the weld beads can be predicted by, for example, setting a shape model BM simulating the shape of the weld beads in a polygonal shape such as a trapezoid and laminating the shape model BM in a pseudo manner. When the shape of the manufacturing object WK is predicted by simulation as described above, the feature amount may be set according to a difference between the predicted shape of a simulation result and the actually measured shape profile. Examples of the feature amount in this case include a cross-sectional area in a specific region between the predicted shape and the shape profile, for example, a cross-sectional area of the narrow portion and a cross-sectional area of a fusible region.

### <Instruction Information for Reducing Fault Candidate Location>

### (Instruction Information Generation Device)

In the welding assistance system 150, various feature amounts are extracted from the measured shape profile as described above, and the fault candidate location is identified from the obtained feature amounts. Then, the welding assistance system 150 generates instruction information such as an instruction for post-processing of the existing weld bead after bead formation and an instruction for changing a welding condition of a new weld bead to be newly formed, based on information on the identified fault candidate location (S4).

The instruction information generation device 190 shown in Fig. 2 includes a post-processing condition setting unit 61 and a welding condition setting unit 63.

The post-processing condition setting unit 61 sets a post-processing condition for repairing the detected fault candidate location by machine working or remelting. The welding condition setting unit 63 sets a welding condition when the weld bead forms at the detected fault candidate location.

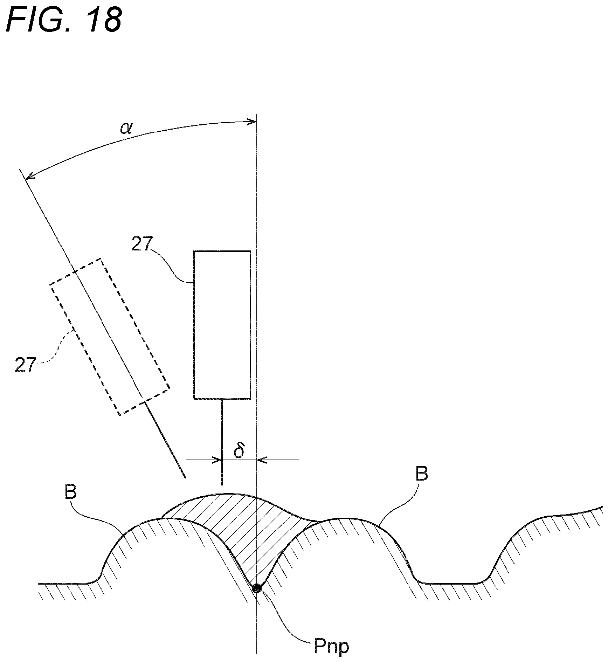

Fig. 18 is an explanatory diagram showing an influence factor on the fault.

The welding condition setting unit 63 searches for a process condition to be adjusted based on the welding condition set in a trajectory plan from information on the fault candidate location. For example, in order to increase an amount of heat input at the time of welding such that the bead melts to a bottom portion of the narrow portion Pnp when the narrow portion Pnp is formed, the welding current, the welding voltage, a filler metal feeding speed, the travel speed, an inclination angle α (retraction angle) of the welding torch 27, and the like are set. In addition, the travel speed may be increased so that the molten metal does not precede the arc generated from the welding torch 27. Furthermore, a horizontal distance δ between the narrow portion Pnp and the welding torch 27 may be set. A specific adjustment amount of each process condition may be appropriately determined within a range in which a welding amount is not changed, based on a condition tried in an element test or the like of a bead on plate (BOP).

The post-processing condition setting unit 61 changes the shape of the narrow portion Pnp of the weld bead of a previous layer by performing cutting repair using a grinder or the like. In this way, it is possible to reliably prevent the occurrence of the fault even when it is difficult to correct only the welding condition.

The post-processing condition setting unit 61 and the welding condition setting unit 63 may both set each condition with reference to a fault prevention condition database DB2 prepared in advance. In the fault prevention condition database DB2, conditions for preventing the occurrence of the fault are stored in association with one another by the element test or the simulation for each assumed feature amount. By referring to the fault prevention condition database DB2, it is possible to identify a condition under which the fault is not generated at the fault candidate location in accordance with the feature amount of the fault candidate location.

### (Example of Reducing Fault Candidate Location)

Next, a treatment example in which the occurrence of the fault is prevented from the information on the extracted fault candidate location will be described.

The instruction information generation device 190 determines a treatment for preventing the occurrence of the fault at the fault candidate location, in accordance with the information on the extracted fault candidate location.

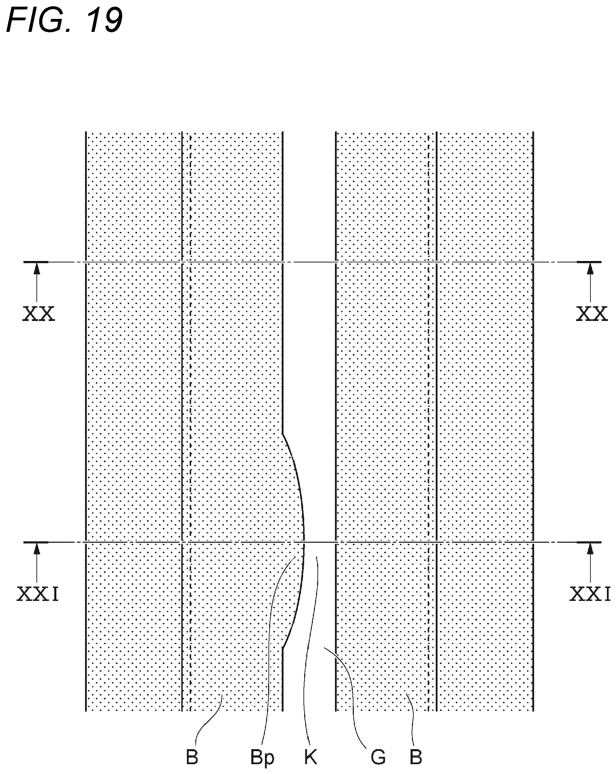

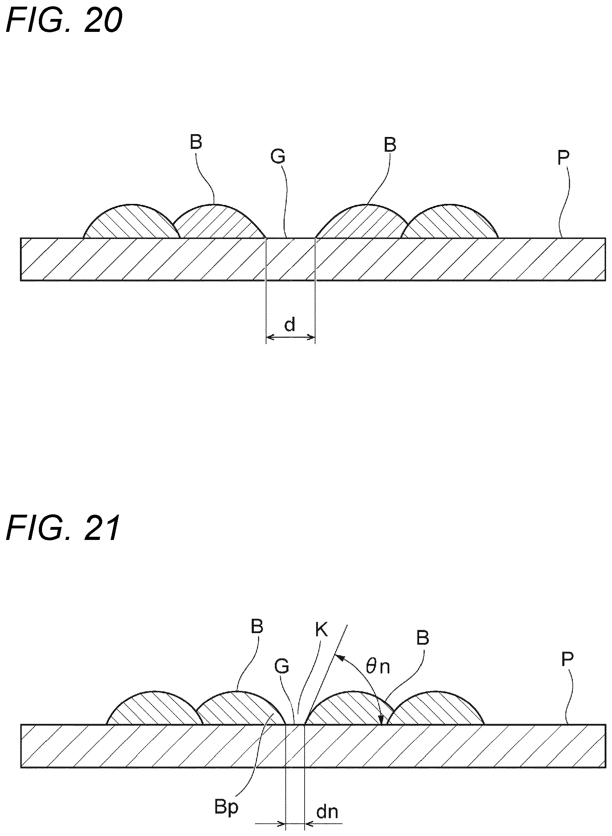

Fig. 19 is a plan view showing the existing weld bead and a bead formation planned surface of the new weld bead. Fig. 20 is a cross-sectional view taken along line XX-XX shown in Fig. 19, and Fig. 21 is a cross-sectional view taken along line XXI-XXI shown in Fig. 19.

As shown in Fig. 19, it is assumed that a protrusion Bp is generated in a part of the existing weld bead B adjacent to the bead formation planned surface G due to melt sagging. In this case, a width dn between the existing weld beads B shown in Fig. 21 is narrower than a width d between the existing weld beads B in the other portions shown in Fig. 20, and the narrow portion K is generated between the beads. The root angle θn of the existing weld bead B in which the protrusion Bp is formed becomes larger. It is considered that this is because, when the high-temperature molten metal flows out more than necessary, the tip thereof is cooled from the bottom surface, and the molten metal is further cooled in an overlapping manner thereon, so that the tip of the protrusion Bp has a standing shape.

In the narrow portion K, when the new weld bead is formed, the molten metal does not flow to a corner of the narrow portion K, and the cavity (fault) is likely to occur. Therefore, in order to prevent the occurrence of the fault, the post-processing condition setting unit 61 generates the instruction information for repairing by the machine working or remelting.

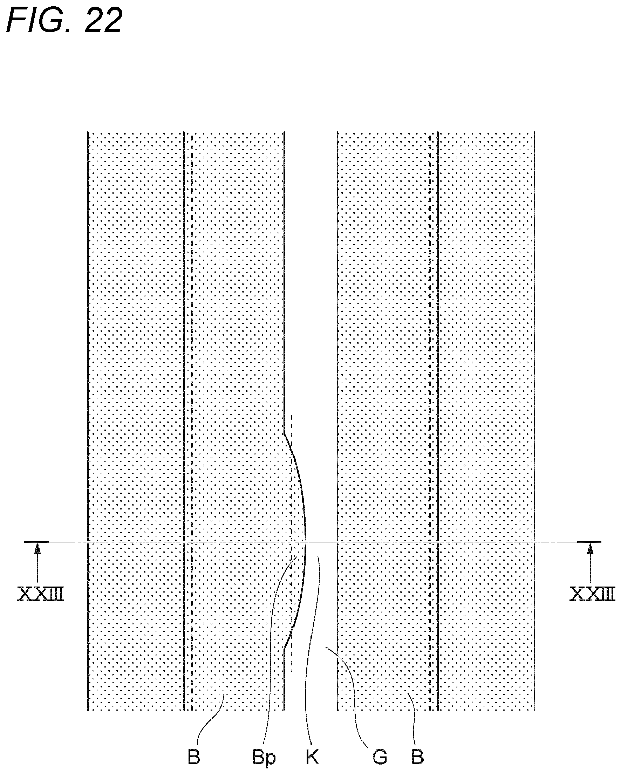

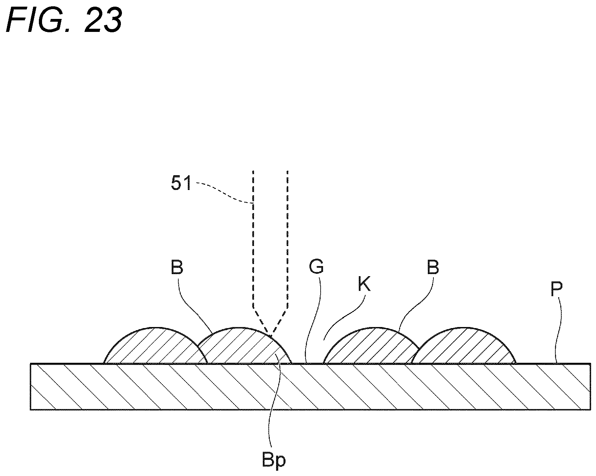

Fig. 22 is a plan view showing an example of the post-processing, and Fig. 23 is a cross-sectional view taken along line XXIII-XXIII shown in Fig. 22.

As shown in Figs. 22 and 23, the protrusion Bp is removed by the processing tool 51 such as a grindstone or a cutter shown in Fig. 1 based on the instruction information generated by the post-processing condition setting unit 61. Accordingly, it is possible to eliminate the narrow portion K and return to the width d of the same level as the case shown in Fig. 20. Therefore, even when the weld bead is formed after the protrusion Bp is removed, the occurrence of the fault is prevented since the narrow portion K does not exist.

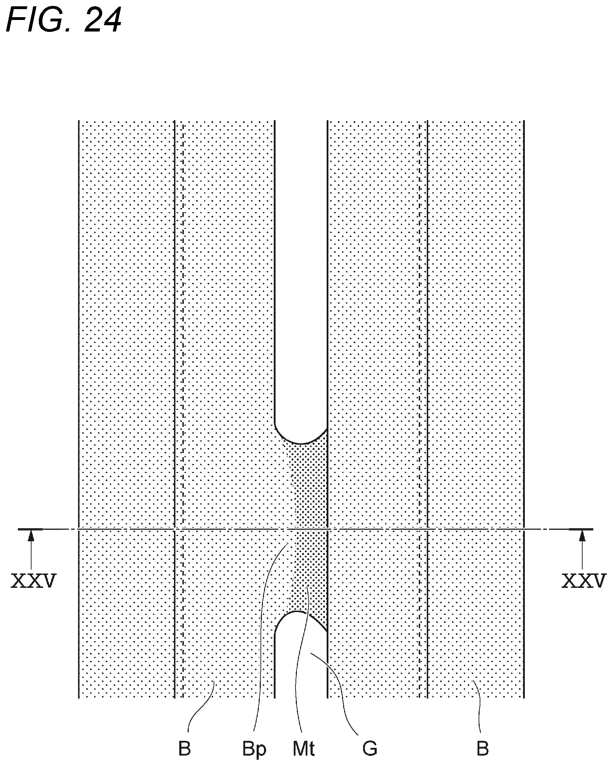

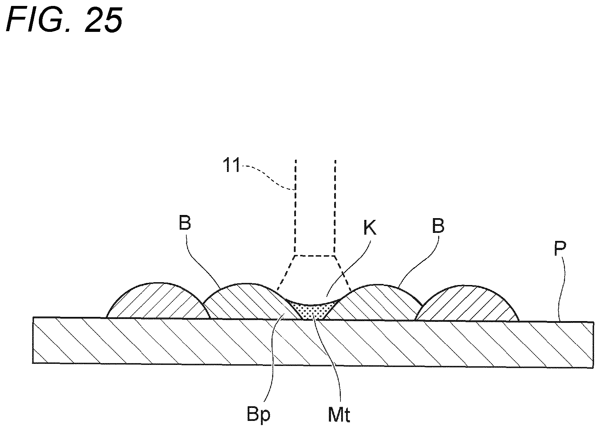

Fig. 24 is a plan view showing a state in which the generated protrusion Bp is remelted. Fig. 25 is a cross-sectional view taken along line XXV-XXV shown in Fig. 24.

As shown in Figs. 24 and 25, based on the instruction information generated by the post-processing condition setting unit 61, the protrusion Bp is heated and remelted by the arc from the welding torch 27 ("naming" in TIG welding). As a result, the molten metal of the protrusion Bp flows into the narrow portion K, a slope of the narrow portion K becomes gentle, and a welded portion Mt having a smooth surface is formed. The welded portion Mt is a melted portion of the protrusion Bp per se and does not include faults such as cavities. When the weld bead is formed on the welded portion Mt, since the surface is smooth, no cavity occurs and the occurrence of the fault can be prevented.

By repairing the protrusion Bp by such post-processing, even when the weld bead B is formed on the bead formation planned surface G, no cavity is formed, and welding defects can be prevented from occurring.

When the weld bead is formed at a location where the protrusion Bp is generated, the instruction information generation device 190 may generate instruction information for preventing the occurrence of the fault by changing the welding condition for forming the weld bead using the welding condition setting unit 63.

In this case, the control unit 11 changes a welding condition on the bead formation trajectory at the position corresponding to the protrusion Bp in accordance with the instruction information on the welding condition output by the instruction information generation device 190. By doing so, even when the weld bead is formed in a state where the protrusion Bp remains, it is possible to prevent the generation of the cavity.

Specific change contents of the welding conditions include the welding current, the welding voltage, a supplying speed of the filler metal M, the travel speed, the inclination angle (push angle and retreat angle) of the welding torch 27, change from an advance method to a retreat method, and the like described above, and it is preferable to set the heat input amount to be adjusted (increased). Among the above methods, for example, when the method is changed to the retreat method, the molten metal during the bead formation does not flow to the front of the arc, a penetration becomes deep, and the influence due to the protrusion Bp can be reduced. Also, in an arc-leading type welding, the same effect can be obtained by increasing the welding current, the welding voltage, and the travel speed.

Furthermore, when it is difficult to prevent the fault by either post-processing or changing welding conditions, both may be performed together. In this case, a corresponding range of the protrusion Bp can be enlarged.

The instruction information generation device 190 may determine whether to implement the post-processing described above or to change the welding conditions and may determine details of the post-processing or the welding conditions with reference to the fault prevention condition database DB2 in accordance with the feature amount in the bead formation trajectory corresponding to the weld bead to be formed. Furthermore, the instruction information generation device 190 may adjust contents of post-processing or changing the welding conditions according to the fault length estimated by the fault size prediction unit 41.

The instruction information generation device 190 can also implement each of the above-described measures determined according to the feature amounts in stages. For example, when the feature amount at the fault candidate location is at a first level close to a feature amount in a normal case (for example, the normal feature amount in the case where the protrusion Bp does not exist), the measure is implemented at the weld bead to be formed by changing the welding condition. When a deviation from the normal feature amount is at a second level larger than the first level, the measure is implemented by rewelding the existing weld bead. Furthermore, in the case of a third level larger than the second level, the machine working is implemented. According to this, a load of the repair work is prevented to the minimum limit according to a degree of the fault expected to occur. Therefore, an operation efficiency is improved, and the takt time can be shortened.

In addition, in a control sequence after the fault candidate location is extracted during the additive manufacturing, for example, the following patterns (A) to (D) or a measure of a combination thereof may be implemented.
(A) In the case where the fault candidate location is extracted in the middle of forming the weld bead, the weld bead formation is temporarily stopped, and the existing weld bead at the fault candidate location is repaired.
(B) In the case where the fault candidate location is extracted in the middle of forming the weld bead, the bead formation is continued along a planned bead formation trajectory, and notification information indicating that the fault candidate location is extracted is output to the display unit 23 or the output unit 25 shown in Fig. 1.
(C) Furthermore, after (B), the formation of the weld bead is stopped at a timing designated by the operator, and the fault candidate location is repaired. After the repair, notification by a notification signal output to the display unit 23 or the output unit 25 is cancelled.
(D) In the case where the fault candidate location is extracted in the middle of forming the weld bead, when the bead formation is continued along the planned bead formation trajectory and the new weld bead is formed at the fault candidate location, the welding condition is changed only within a range of a region of the fault candidate location.

According to the fault-monitoring method described above, since it is possible to identify a path in which an unwelded fault is likely to occur during manufacturing, it is possible to obtain room for measuring this in the middle of manufacturing. Accordingly, it is possible to prevent the occurrence of faults in real time, and it is possible to save labor such as repairing after completion of the manufacturing object. In addition, by storing the content of the measure in the middle of the manufacturing in log data, when the fault of the manufacturing object after completion is inspected, it is possible to identify a cause of the fault or the like by comparing an actual fault portion with information on the log data. In this way, a configuration excellent in traceability can be achieved.

### REFERENCE SIGNS LIST

11 control unit
13 welding robot
15 robot driving unit
17 filler metal supply unit
17a reel
19 welding power supply unit
21 shape detection unit
23 display unit
25 output unit
27 welding torch
31 manufacturing program generation unit
33 shape profile acquisition unit
35 feature amount extraction unit
37 fault position identification unit
39 formation portion identification unit
41 fault size prediction unit
51 processing tool
53 robot arm
55 processing driving unit
100 welding system
110 welding device
130 bead processing device
150 welding assistance system
170 fault-monitoring device
190 instruction information generation device
AC approximate curve
Af filling portion
AW wall portion
B, B1, B2, B3, B4 existing weld bead (weld bead)
Ba new weld bead
BL baseline
BM shape model
Bp protrusion
d, dn width
DB1 shape database
DB2 fault prevention condition database
Db1, Db2 trapezoid
Dh bead lamination direction
Dn inclination direction
Dr bead arrangement direction
F1, F2, F3, F4, Fn bead formation trajectory
FL base surface
G bead formation planned surface
K narrow portion
L1 tangent line
L2, L3 straight line
L4 common tangent line
Lc1, Lc2 region
M filler metal
Mt welded portion
P base plate
P1, P2 position
Pa, Pb arrangement pitch
Pc1, Pc2 bead center
Pd lowest point
PF fault candidate location
Pk weld bead formation position
Pm1, Pm2 contact point
Pn1, Pn2, Pr1, Pr2 surface position
Pnp narrow portion
Pt1, Pt2 bead top portion
r1, r2 radial distance
U, Un bottom portion interval
W bead interval
Wa width
WK manufacturing object (structure)
θ, θn root angle
φ1, φ2 angle of weld leg
ψ inclination angle

## Claims

1. A fault-monitoring device that predicts, when a structure is formed by layering a plurality of weld beads formed by melting and solidifying a filler metal using a welding device, an occurrence of a welding fault based on history information on the formation of the weld beads by the welding device, the fault-monitoring device comprising:
a shape profile acquisition unit configured to acquire a shape profile of the existing weld bead;
a feature amount extraction unit configured to extract a feature amount of a concave shape formed by the plurality of existing weld beads included in the shape profile;
a fault position identification unit configured to identify a fault candidate location where the welding fault is expected to occur according to the extracted feature amount; and
a control unit configured to cause the shape profile acquisition unit to update the shape profile when the welding device newly forms the weld bead and to repeatedly execute the extraction of the feature amount by the feature amount extraction unit and the identification of the fault candidate location by the fault position identification unit.

2. The fault-monitoring device according to claim 1, wherein
the feature amount includes at least one of a root angle that is a corner on a weld bead side among intersection angles between a tangent line at a position where the existing weld bead is in contact with a base surface of the weld bead and the base surface in a cross section orthogonal to a bead formation direction of the weld bead, and a bead formation region width of a region where the weld bead is to be newly formed.

3. The fault-monitoring device according to claim 1, wherein
the feature amount includes at least one of a bead interval between bead top portions, a valley depth from the bead top portion to a valley bottom, and a bottom portion interval between the weld beads at the valley bottom, of a pair of existing weld beads arranged adjacent to each other to form a valley portion in a cross section orthogonal to a bead formation direction of the weld bead.

4. The fault-monitoring device according to claim 3, wherein
the feature amount includes a cross-sectional area of the concave shape calculated using at least one of the feature amounts.

5. The fault-monitoring device according to any one of claims 1 to 4, further comprising:
a formation portion identification unit configured to identify whether the existing weld bead is a wall portion continuous in a wall shape or a filling portion in a region surrounded by the wall portion.

6. The fault-monitoring device according to any one of claims 1 to 4, further comprising:
a fault size prediction unit configured to predict a fault size from position information on the fault candidate location or a size of the feature amount.

7. The fault-monitoring device according to claim 5, further comprising:
a fault size prediction unit configured to predict a fault size from position information on the fault candidate location or a size of the feature amount.

8. A fault-monitoring method for predicting, when a structure is formed by layering a plurality of weld beads formed by melting and solidifying a filler metal using a welding device, an occurrence of a welding fault based on history information on the formation of the weld beads by the welding device, the method comprising:
a step of acquiring a shape profile of the existing weld bead;
a step of extracting a feature amount of a concave shape formed by the plurality of existing weld beads included in the shape profile;
a step of identifying a fault candidate location where the welding fault is expected to occur according to the extracted feature amount; and
a step of updating the shape profile when the welding device newly forms the weld bead and repeatedly executing the extraction of the feature amount and the identification of the fault candidate location.

9. The fault-monitoring method according to claim 8, further comprising:
a step of distinguishing whether the existing weld bead is a wall portion continuous in a wall shape or a filling portion in a region surrounded by the wall portion to obtain the feature amount only when the filling portion is formed.

10. The fault-monitoring method according to claim 8 or 9, further comprising:
a step of predicting a fault size from position information on the fault candidate location or a size of the feature amount.

11. A welding assistance system comprising:
the fault-monitoring device according to any one of claims 1 to 4; and
an instruction information generation device configured to generate instruction information for reducing the welding fault at the identified fault candidate location.

12. The welding assistance system according to claim 11, wherein
the instruction information generation device includes a post-processing condition setting unit configured to set a condition for repairing the fault candidate location by machine working or remelting.

13. The welding assistance system according to claim 11, wherein
the instruction information generation device includes a welding condition setting unit configured to set at least one of welding conditions among a welding current, a welding voltage, a filler metal feeding speed, a travel speed, and a torch holding angle when the weld bead is formed at the fault candidate location.

14. The welding assistance system according to claim 12, wherein
the instruction information generation device includes a welding condition setting unit configured to set at least one of welding conditions among a welding current, a welding voltage, a filler metal feeding speed, a travel speed, and a torch holding angle when the weld bead is formed at the fault candidate location.

15. A welding system comprising:
the welding assistance system according to claim 11;
the welding device configured to form the weld bead; and
a bead processing device configured to process a fault candidate location of the weld bead of a formed structure.

## Patentansprüche

1. Fehlerüberwachungsvorrichtung, die bei der Bildung einer Struktur durch schichtweises Aufeinanderschichten einer Vielzahl von Schweißraupen, die durch Schmelzen und Erstarren eines Füllmetalls unter Verwendung einer Schweißvorrichtung gebildet werden, das Auftreten eines Schweißfehlers basierend auf Verlaufsinformationen zur Bildung der Schweißraupen durch die Schweißvorrichtung vorhersagt, wobei die Fehlerüberwachungsvorrichtung umfasst:
eine Formprofilerfassungseinheit, die dazu konfiguriert ist, ein Formprofil der vorhandenen Schweißraupe zu erfassen;
eine Merkmalsbetragsextraktionseinheit, die dazu konfiguriert ist, einen Merkmalsbetrag einer konkaven Form zu extrahieren, die durch die mehreren im Formprofil enthaltenen vorhandenen Schweißraupen gebildet wird;
eine Fehlerpositionsidentifizierungseinheit, die dazu konfiguriert ist, eine mögliche Fehlerstelle zu identifizieren, an der gemäß dem extrahierten Merkmalsbetrag das Auftreten des Schweißfehlers zu erwarten ist; und
eine Steuereinheit, die dazu konfiguriert ist, die Formprofilerfassungseinheit zu veranlassen, das Formprofil zu aktualisieren, wenn die Schweißvorrichtung die Schweißraupe neu bildet, und die Extraktion des Merkmalsbetrags durch die Merkmalsbetragsextraktionseinheit und die Identifizierung der möglichen Fehlerstelle durch die Fehlerpositionsidentifizierungseinheit wiederholt auszuführen.

2. Fehlerüberwachungsvorrichtung nach Anspruch 1, wobei
die Merkmalsmenge mindestens einen von folgenden Werten umfasst: einen Wurzelwinkel, der eine Ecke auf einer Schweißraupenseite unter den Schnittwinkeln zwischen einer Tangente an einer Position ist, an der die vorhandene Schweißraupe mit einer Basisoberfläche der Schweißraupe in Kontakt ist, und der Basisoberfläche in einem Querschnitt orthogonal zu einer Raupenbildungsrichtung der Schweißraupe, und eine Raupenbildungsbereichsbreite eines Bereichs, in dem die Schweißraupe neu gebildet werden soll.

3. Fehlerüberwachungsvorrichtung nach Anspruch 1, wobei
die Merkmalsmenge mindestens eines von einem Raupenabstand zwischen Raupenoberteilen, einer Taltiefe vom Raupenoberteil bis zu einem Talgrund und einem Bodenabschnittsabstand zwischen den Schweißraupen am Talgrund eines Paars vorhandener Schweißraupen umfasst, die nebeneinander angeordnet sind, um in einem Querschnitt orthogonal zu einer Raupenbildungsrichtung der Schweißraupe einen Talabschnitt zu bilden.

4. Fehlerüberwachungsvorrichtung nach Anspruch 3, wobei
der Merkmalsbetrag eine Querschnittsfläche der konkaven Form umfasst, die unter Verwendung mindestens einem der Merkmalsbeträge berechnet wird.

5. Fehlerüberwachungsvorrichtung nach einem der Ansprüche 1 bis 4, die weiter umfasst:
eine Einheit zur Identifizierung von Formationsabschnitten, die dazu konfiguriert ist, zu identifizieren, ob die vorhandene Schweißraupe ein in einer Wandform kontinuierlicher Wandabschnitt oder ein Füllabschnitt in einem vom Wandabschnitt umgebenen Bereich ist.

6. Fehlerüberwachungsvorrichtung nach einem der Ansprüche 1 bis 4, weiter umfassend:
eine Fehlergrößenvorhersageeinheit, die dazu konfiguriert ist, eine Fehlergröße aus Positionsinformationen über den Fehlerkandidatenort oder eine Größe der Merkmalsmenge vorherzusagen.

7. Fehlerüberwachungsvorrichtung nach Anspruch 5, weiter umfassend:
eine Fehlergrößenvorhersageeinheit, die dazu konfiguriert ist, eine Fehlergröße aus Positionsinformationen über den Fehlerkandidatenort oder einer Größe der Merkmalsmenge vorherzusagen.

8. Fehlerüberwachungsverfahren zum Vorhersagen des Auftretens eines Schweißfehlers bei der Bildung einer Struktur durch schichtweises Aufeinanderschichten einer Vielzahl von Schweißraupen, die durch Schmelzen und Erstarren eines Füllmetalls unter Verwendung eines Schweißgeräts gebildet werden, basierend auf Verlaufsinformationen zur Bildung der Schweißraupen durch das Schweißgerät, wobei das Verfahren umfasst:
einen Schritt zum Erfassen eines Formprofils der vorhandenen Schweißraupe;
einen Schritt zum Extrahieren eines Merkmalsbetrags einer konkaven Form, die durch die Vielzahl von im Formprofil enthaltenen vorhandenen Schweißraupen gebildet wird;
einen Schritt zum Identifizieren einer potenziellen Fehlerstelle, an der gemäß dem extrahierten Merkmalsbetrag das Auftreten des Schweißfehlers erwartet wird; und
einen Schritt zum Aktualisieren des Formprofils, wenn das Schweißgerät die Schweißraupe neu bildet, und wiederholtes Ausführen der Extraktion des Merkmalsbetrags und der Identifizierung der potenziellen Fehlerstelle.

9. Fehlerüberwachungsverfahren nach Anspruch 8, das weiter umfasst:
einen Schritt zum Unterscheiden, ob die vorhandene Schweißraupe ein in einer Wandform kontinuierlicher Wandabschnitt oder ein Füllabschnitt in einem vom Wandabschnitt umgebenen Bereich ist, um die Merkmalsmenge nur zu erhalten, wenn der Füllabschnitt ausgebildet ist.

10. Fehlerüberwachungsverfahren nach Anspruch 8 oder 9, das weiter umfasst:
einen Schritt zum Vorhersagen einer Fehlergröße aus Positionsinformationen zum Fehlerkandidatenort oder einer Größe der Merkmalsmenge.

11. Schweißassistenzsystem, umfassend:
die Fehlerüberwachungsvorrichtung nach einem der Ansprüche 1 bis 4; und
eine Vorrichtung zum Erzeugen von Anweisungsinformationen, die dazu konfiguriert ist, Anweisungsinformationen zum Reduzieren des Schweißfehlers an der identifizierten Fehlerkandidatenstelle zu erzeugen.

12. Schweißassistenzsystem nach Anspruch 11, wobei
die Vorrichtung zur Erzeugung von Anweisungsinformationen eine Einheit zum Festlegen von Nachbearbeitungsbedingungen umfasst, die dazu konfiguriert ist, eine Bedingung zum Reparieren der Fehlerkandidatenstelle durch maschinelle Bearbeitung oder Umschmelzen festzulegen.

13. Schweißassistenzsystem nach Anspruch 11, wobei
die Vorrichtung zur Erzeugung von Anweisungsinformationen eine Einheit zum Einstellen von Schweißbedingungen umfasst, die dazu konfiguriert ist, mindestens eine der Schweißbedingungen Schweißstrom, Schweißspannung, Füllmetall-Zufuhrgeschwindigkeit, Bewegungsgeschwindigkeit und Brennerhaltewinkel einzustellen, wenn die Schweißraupe an der Fehlerkandidatenstelle gebildet wird.

14. Schweißassistenzsystem nach Anspruch 12, wobei
die Vorrichtung zur Erzeugung von Anweisungsinformationen eine Einheit zum Einstellen von Schweißbedingungen umfasst, die dazu konfiguriert ist, mindestens eine der Schweißbedingungen aus Schweißstrom, Schweißspannung, Füllmetall-Zufuhrgeschwindigkeit, Bewegungsgeschwindigkeit und Brennerhaltewinkel einzustellen, wenn die Schweißraupe an der Fehlerkandidatenstelle gebildet wird.

15. Schweißsystem, umfassend:
das Schweißassistenzsystem nach Anspruch 11;
die Schweißvorrichtung, die zum Bilden der Schweißraupe konfiguriert ist; und
eine Raupenverarbeitungsvorrichtung, die zum Verarbeiten einer Fehlerkandidatenstelle der Schweißraupe einer geformten Struktur konfiguriert ist.

## Revendications

1. Dispositif de surveillance de défaut qui prédit, lorsqu'une structure est formée en stratifiant une pluralité de cordons de soudure en faisant fondre et solidifiant un métal d'apport en utilisant un dispositif de soudage, une occurrence d'un défaut de soudage en fonction d'informations historiques sur la formation des cordons de soudure par le dispositif de soudage, le dispositif de surveillance de défaut comprenant :
un module d'acquisition de profil de forme configuré pour acquérir un profil de forme du cordon de soudure existant ;
un module d'extraction de quantité caractéristique configuré pour extraire une quantité caractéristique d'une forme concave formée par la pluralité de cordons de soudure existants inclus dans le profil de forme ;
un module d'identification de position de défaut configuré pour identifier un emplacement candidat de défaut où le défaut de soudage est attendu de se produire en fonction de la quantité caractéristique extraite ; et
un module de commande configuré pour amener le module d'acquisition de profil de forme à mettre à jour le profil de forme lorsque le dispositif de soudage forme nouvellement le cordon de soudure et pour exécuter de manière répétée l'extraction de la quantité caractéristique par le module d'extraction de quantité caractéristique et l'identification de l'emplacement candidat de défaut par le module d'identification de position de défaut.

2. Dispositif de surveillance de défaut selon la revendication 1, dans lequel
la quantité caractéristique inclut au moins un élément parmi un angle de racine qui est un coin sur un côté de cordon de soudure parmi des angles d'intersection entre une ligne tangente à une position où le cordon de soudure existant est en contact avec une surface de base du cordon de soudure et la surface de base dans une coupe transversale orthogonale à une direction de formation de cordon du cordon de soudure, et une largeur de région de formation de cordon d'une région où le cordon de soudure doit être nouvellement formé.

3. Dispositif de surveillance de défaut selon la revendication 1, dans lequel la quantité caractéristique inclut au moins un élément parmi un intervalle de cordon entre des portions supérieures de cordon, une profondeur de creux de la portion supérieure de cordon à un fond de creux, et un intervalle de portion inférieure entre les cordons de soudure au fond de creux, d'une paire de cordons de soudure existants agencés de manière adjacente l'un à l'autre pour former une portion de creux dans une coupe transversale orthogonale à une direction de formation de cordon du cordon de soudure.

4. Dispositif de surveillance de défaut selon la revendication 3, dans lequel
la quantité caractéristique inclut une section transversale de la forme concave calculée en utilisant au moins une des quantités caractéristiques.

5. Dispositif de surveillance de défaut selon l'une quelconque des revendications 1 à 4, comprenant en outre :
un module d'identification de portion de formation configuré pour identifier si le cordon de soudure existant est une portion de paroi continue en une forme de paroi ou une portion de remplissage dans une région entourée de la portion de paroi.

6. Dispositif de surveillance de défaut selon l'une quelconque des revendications 1 à 4, comprenant en outre :
un module de prédiction de taille de défaut configuré pour prédire une taille de défaut à partir d'informations de position sur l'emplacement candidat de défaut ou d'une taille de la quantité caractéristique.

7. Dispositif de surveillance de défaut selon la revendication 5, comprenant en outre :
un module de prédiction de taille de défaut configuré pour prédire une taille de défaut à partir d'informations de position sur l'emplacement candidat de défaut ou d'une taille de la quantité caractéristique.

8. Procédé de surveillance de défaut pour prédire, lorsqu'une structure est formée en stratifiant une pluralité de cordons de soudure en faisant fondre et solidifiant un métal d'apport en utilisant un dispositif de soudage, une occurrence d'un défaut de soudage en fonction d'informations historiques sur la formation des cordons de soudure par le dispositif de soudage, le procédé comprenant :
une étape d'acquisition d'un profil de forme du cordon de soudure existant ;
une étape d'extraction d'une quantité caractéristique d'une forme concave formée par la pluralité de cordons de soudure existants inclus dans le profil de forme ;
une étape d'identification d'un emplacement candidat de défaut où le défaut de soudage est attendu de se produire en fonction de la quantité caractéristique extraite ; et
une étape de mise à jour du profil de forme lorsque le dispositif de soudage forme nouvellement le cordon de soudure et d'exécution répétée de l'extraction de la quantité caractéristique et d'identification de l'emplacement candidat de défaut.

9. Procédé de surveillance de défaut selon la revendication 8, comprenant en outre :
une étape de distinction du fait que le cordon de soudure existant est une portion de paroi continue en une forme de paroi ou une portion de remplissage dans une région entourée de la portion de paroi pour obtenir la quantité caractéristique uniquement lorsque la portion de remplissage est formée.

10. Procédé de surveillance de défaut selon la revendication 8 ou 9, comprenant en outre :
une étape de prédiction d'une taille de défaut à partir d'informations de position sur l'emplacement candidat de défaut ou d'une taille de la quantité caractéristique.

11. Système d'aide au soudage comprenant :
le dispositif de surveillance de défaut selon l'une quelconque des revendications 1 à 4 ; et
un dispositif de génération d'informations d'instruction configuré pour générer des informations d'instruction pour réduire le défaut de soudage à l'emplacement candidat de défaut identifié.

12. Système d'aide au soudage selon la revendication 11, dans lequel
le dispositif de génération d'informations d'instruction inclut un module de réglage de condition post-usinage configuré pour régler une condition pour réparer l'emplacement candidat de défaut par travail mécanique ou refonte.

13. Système d'aide au soudage selon la revendication 11, dans lequel
le dispositif de génération d'informations d'instruction inclut un module de réglage de condition de soudage configuré pour régler au moins une de conditions de soudage parmi un courant de soudage, une tension de soudage, une vitesse d'alimentation en métal d'apport, une vitesse de déplacement et un angle de maintien de chalumeau lorsque le cordon de soudure est formé à l'emplacement candidat de défaut.

14. Système d'aide au soudage selon la revendication 12, dans lequel
le dispositif de génération d'informations d'instruction inclut un module de réglage de condition de soudage configuré pour régler au moins une de conditions de soudage parmi un courant de soudage, une tension de soudage, une vitesse d'alimentation en métal d'apport, une vitesse de déplacement et un angle de maintien de chalumeau lorsque le cordon de soudure est formé à l'emplacement candidat de défaut.

15. Système de soudage comprenant :
le système d'aide au soudage selon la revendication 11 ;
le dispositif de soudage configuré pour former le cordon de soudure ; et
un dispositif d'usinage de cordon configuré pour usiner un emplacement candidat de défaut du cordon de soudure d'une structure formée.
